(19) Europäisches Patentamt
European Patent Office
Office européen des brevets

(11) **EP 3 577 802 B1**

(12) **EUROPÄISCHE PATENTSCHRIFT**

(45) Veröffentlichungstag und Bekanntmachung des Hinweises auf die Patenterteilung:
**21.10.2020 Patentblatt 2020/43**

(21) Anmeldenummer: **17711599.5**

(22) Anmeldetag: **13.03.2017**

(51) Int Cl.:
***H04J 3/06*** *(2006.01)*

(86) Internationale Anmeldenummer:
**PCT/EP2017/055819**

(87) Internationale Veröffentlichungsnummer:
**WO 2018/166576 (20.09.2018 Gazette 2018/38)**

(54) **VERFAHREN UND VORRICHTUNG ZUR ZEITGESTEUERTEN DATENÜBERTRAGUNG IN EINEM TSN**

METHOD AND APPARATUS FOR TIME-CONTROLLED DATA TRANSMISSION IN A TSN

PROCÉDÉ ET DISPOSITIF POUR LA TRANSMISSION DE DONNÉES À COMMANDE TEMPORELLE DANS UN TSN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.12.2019 Patentblatt 2019/50**

(73) Patentinhaber: **Siemens Aktiengesellschaft 80333 München (DE)**

(72) Erfinder:
• **CHEN, Feng**
**90537 Feucht (DE)**
• **GÖTZ, Franz-Josef**
**91180 Heideck (DE)**
• **KIESSLING, Marcel**
**91235 Velden (DE)**
• **NGUYEN, An Ninh**
**90427 Nürnberg (DE)**
• **SCHMITT, Jürgen**
**90766 Fürth (DE)**

(56) Entgegenhaltungen:
**EP-A1- 1 940 089**

• **"IEEE Standard for Local and metropolitan area networks -- Bridges and Bridged Networks - Amendment 25: Enhancements for Scheduled Traffic;IEEE Std 802.1Qbv-2015 (Amendment to IEEE Std 802.1Q--- as amended by IEEE Std 802.1Qca-2015, IEEE Std 802.1Qcd-2015, and IEEE Std 802.1Q---/Cor 1-2015)", IEEE STANDARD, IEEE, PISCATAWAY, NJ, USA, 18. März 2016 (2016-03-18), Seiten 1-57, XP068110534,**

**Beschreibung**

Durch die Erweiterungen der IEEE Arbeitsgruppe TSN (Time Sensitive Networking, IEEE 802.1) wird Echtzeitkommunikation in Netzwerken, die gemäß Ethernet Standard arbeiten, ermöglicht. Die aktuellen, sich in Entwicklung befindenden IEEE Standards für TSN berücksichtigen besonders die Anforderungen der Automobilindustrie und Steuerungen in Automatisierungsanlagen mit ihren Anforderungen an die Netzwerke bezüglich Echtzeitverhalten. Es werden Mechanismen und Protokolle definiert, um deterministische Dienste anbieten zu können für das zeitsensitives Streaming durch ein Netzwerk gemäß Ethernet Standard.

Der sogenannte Time-Aware-Shaper (TAS) ist im Standard IEEE 802.1Qbv definiert und kann zeitlich vorge-planten, gescheduleten Datentransfer vor Störungen aus anderem Datenverkehr schützen, indem festgelegte Zeitfenster verwendet werden und so eine deterministische niedrige Latenz erreicht wird. Falls das sogenannte "cut-through" Routing in Kombination mit TAS angeboten wird, so kann die beste Echtzeit-Leistungsfähigkeit mit niedrigster Latenz und geringsten Verzögerungs-Varianz erreicht werden.
Ein TAS Netzwerk für einen geschedulten Datentransfer anzuwenden erfordert, dass alle Netzelemente, also sowohl die Vermittlungsstationen / Bridges als auch die Endteilnehmerstationen zeitsynchronisiert sind, so dass die TAS-Zeitfenster auf derselben Zeitbasis gescheduled werden.

Das Scheduling von TAS Fenstern hängt von der globalen Netzinformation ab, beispielsweise von der Netzwerk-Topologie, und benötigt daher ein vollständig verwaltetes Netzwerk. Wegen des hohen Planungs- und Verwaltungsaufwands und ineffizienter Bandbreiten-Ausnutzung für den verbleibenden Datenverkehr werden diese Netze, so wie beispielsweise bereits PROFINET IRT (Isochrounous Real Time) Netz, hauptsächlich für Harte Echtzeitsysteme und Motion-Control-Anwendungen verwendet, die höchste Anforderungen an die Echtzeitfähigkeit und Zuverlässigkeit stellen.
Für solche Echtzeit-Systeme, die nicht diese höchsten Anforderungen mit niedrigster Latenz fordern, werden andere Verkehrsflußregelungen mit weniger Planungsaufwand als TAS bevorzugt, solange der benötigte Determinismus angeboten wird.

Der sogenannte Credit-Based Shaper (CBS), wurde in dem IEEE Standard 802.1Qav von der AVB (Audio-Video-Bridging) Task Group definiert und ist vorgesehen für Audio-Video Streams mit begrenzter Latenz und Verlustfreiheit bei Datenstau. CBS glättet den Datentransfer der Streams durch gleichmäßige Verteilung der Datenpakete über die Zeit. Die Idee dahinter ist, die Konzentration von Datenframes zu verhindern, was eine Überlastung der Datenpuffer der Bridges zur Folge haben könnte und damit den Verlust von Datenframes. Die Begrenzung der Konzentration hat den Vorteil, dass der in den Bridges benötigte Daten-Puffer am Ausgangsport kleiner dimensioniert sein kann und einen niedrigeren maximalen Delay im Ausgangs-Stream der Bridge erzeugt.

AVB verwendet das Stream-Reservation Protokoll (SRP), das in IEEE 802.1Qat definiert ist, für die Reservierung von Ressourcen im Netzwerk für jeden einzelnen AVB Stream, kalkuliert auf Basis eines Worst-case Delays und mit einem Speicherbedarf berechnet für die Bridges basierend auf Traffic Classes.
Es stellt sich jedoch heraus, dass der Worst-Case Delay pro Netzelement (Bridge) bei CBS topologieabhängig ist und dieselbe Abhängigkeit findet sich beim Speicherbedarf. Das führt dazu, dass die Worst-Case Analyse sehr komplex wird und topologieabhängig ist. Ungenaue Worst-Case Berechnungen führen zu falschen Reservierungen im Netzwerk, es werden entweder zu viele Ressourcen belegt. Der jedoch problematischere Fall wäre die zu geringe Reservierung, die zu unerwarteten Datenverlusten führt aufgrund zu gering dimensionierter Bridge Speicher, was letztendlich ernsthafte Fehler im Echtzeit-System verursacht.

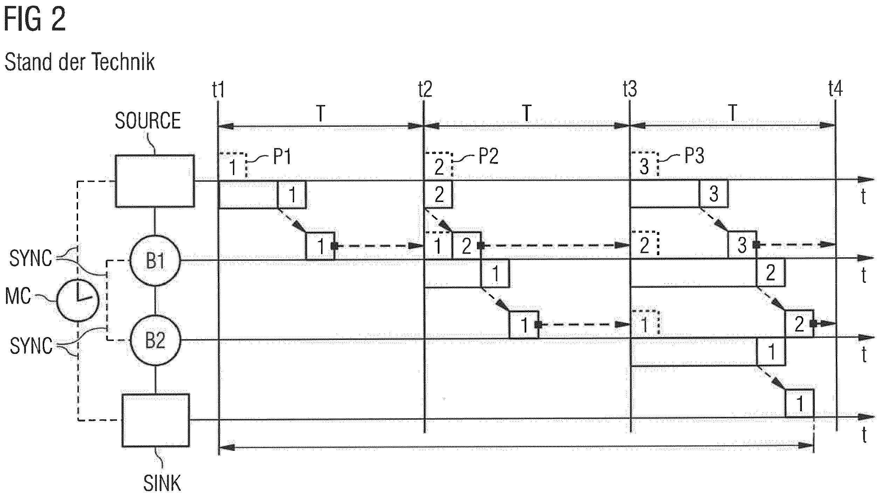

Zur Vermeidung der oben beschriebenen Probleme wurde ein weiteres Protokoll definiert, das Cyclic Queuing and Forwarding (CQF) Protocol, IEEE 802.1Qch. Es bietet eine Flußkontrolle mit garantierter maximaler Latenz und einer begrenzten Verzögerungsschwankung pro Sprung (sogenannter fixed delivery Jitter an jeder Bridge im Netzwerk). Das Senden von Datenpaketen gemäß CQF Protokoll wird exemplarisch in Figur 2 dargestellt. In jeder Bridge B1, B2 ist die Zeit aufgeteilt in eine Abfolge von gleich langen Zeitfenster T, im Folgenden auch synonym als Zeitintervall bezeichnet. CQF verlangt dabei, dass ein Datenframe P1, P2, P3, der in einem ersten Intervall im Zeitraum zwischen Zeitpunkt t1 und t2 empfangen wird im darauffolgenden zweiten Intervall zwischen t2 und t3 an das im Pfad darauffolgende nächste Netzelement übertragen wird. Das bedeutet insbesondere, dass die Anforderung besteht, dass das Netz zeitsynchronisiert ist, d. h. alle Bridges in dem Netzwerk wissen, wann das nächste Intervall beginnt und wie lange es dauert. Synchronisiert wird durch einen zentralen Zeitgeber MC, welcher dafür sorgt, dass die einzelnen Netzelemente auf der gleichen Zeitbasis laufen, SYNC.

Da bei CQF jeder Datenframe von einer Bridge im Laufe des aktuellen Intervalls genau um einen Hop im Pfad weiter übertragen wird, ist die Verzögerung pro Hop begrenzt auf zweimal die Länge des Zeitintervalls T, der Worst-case Delay.
Die maximale Latenz für die Übertragung eines Frames in dem Netz ist also

$$\text{Latenz}_{\text{Max}} = (h + 1) * T$$

wobei h die Anzahl der Hops ist.

Wenn ein Frame bei jedem Hop immer zu Anfang des nächsten Frames und ohne weitere Verzögerung durch störenden Datenverkehr übertragen wird, abgesehen von der Verzögerung die durch einen Shaper im Netz verursacht wird, dann ist die minimale Latenz wie folgt zu berechnen:

$$\text{Latenz}_{\text{Min}} = (h - 1) * T$$

Der Übertragungsjitter beträgt bei CQF die Zeitdauer 2T, welches ein fester Wert ist, unabhängig von der Anzahl der Hops in der Übertragungsstrecke. CQF erreicht eine deterministische Latenz und einen topologie-unabhängigen Jitter jedoch für den Preis einer erhöhten Latenz im besten Fall als Resultat von der durch den Shaper erzwungenen Wartezeit in jeder Bridge.

Der größte Vorteil von CQF im Vergleich zu CBS ist die massiv reduzierte Komplexität in der Berechnung der worst-case Verzögerung wegen der fehlenden Abhängigkeit von der Netzwerk-Topologie. Der festgelegte Jitter der CQF Traffic Class führt zu gleichmäßig verteilten Speichergrößen in den CQF Warteschlangen (Queues) aller Bridges, was einen verallgemeinernden Ansatz im Ressourcen-Berechnungsmodell erlaubt, der geeignet ist für jedes mögliche CQF Szenario.

Um sicherzustellen, dass die oben berechneten Latenzgrenzen erreicht werden können, muss die Dauer T der Zeitintervalle groß genug gewählt werden um allen Daten in einem vorgegebenen Klassen-Messintervall Platz zu bieten, plus einem Stör-Frame maximaler Größe von niedrigerer Priorität.

Wenn die in IEEE 802.1bu/802.3.3br definierte Frame Preemption mit CQF kombiniert wird, dann kann die maximale Größe eines Stör-Fragments weiter reduziert werden auf die Größe eines maximalen Frame-Fragments. Das bedeutet, dass für die gleiche Intervalldauer T für die Verwendung mit CQF mehr Streamdata reserviert werden kann, wenn Preemption verwendet wird.

Obwohl CQF gegenüber CBS bezüglich der Technologie-Unabhängigkeit und der Einfachheit der Berechnung der Worst-Case Latenz im ungünstigsten Fall überlegen ist, benötigt CQF ebenfalls einen zyklischen Zeitablauf das als Basis ein zeitsynchronisiertes Netzwerk benötigt. Wenn CQF mit PSFP (perstream filtering and policing, IEEE 802.1Qi) und TAS (IEEE 802.QBv) implementiert wird, dann werden von CQF am AusgangsPort zwei Transport-Klasse Warteschlangen pro Datenstream benötigt für eine einzelne SR (Stream Reservation) Class. Die zwei Warteschlangen werden zyklisch abwechselnd verwendet mit Hilfe von Input und Output Gate Control um sicherzustellen, dass die eine Warteschlange im Puffer-Status arbeitet und die andere im Übertragungs-Modus. Weil die Traffic Classes eine begrenzte Ressource einer Bridge sind (bei einer IEEE 802.1Q konformen Bridge sind es maximal 8), wird der Bedarf von zwei Warteschlangen pro Traffic Class als Nachteil der CQF angesehen. Der zweite Schwachpunkt von CQF ist, wie bereits erwähnt, die Notwendigkeit einer Zeitsynchronisierung.

Aus der EP 1 940 089 A1 ist eine Datenübertragungsmethode beispielsweise für die Protokolle 3G HSDPA bekannt (HARQ, 3GPP TS 25.308), welche den Delay bei der Datenübertragung berücksichtigt, diese Informationen über den Übertragungsweg aufkumuliert und abhängig von der Information bei der Übertragung ein passendes Übertragungsprotokoll verwendet zur Einhaltung einer gewünschten Übertragungszeit.

Es ist daher Aufgabe der Erfindung, ein Verfahren und eine Vorrichtung anzugeben, zur Übertragung von zeitkritischen Datenpaketen mit einer garantierten maximalen Latenz, eine topologie-unabhängige Latenz-Kalkulation und eine begrenzte Schwankung der Verzögerungen (delay), ohne zentrale Zeitsynchronisation im Netz und/oder in den Endgeräten.

Die Aufgabe wird gelöst durch je ein Verfahren und eine Vorrichtung mit den Merkmalen der unabhängigen Patentansprüche.

Das Verfahren betrifft die zeitgesteuerte Datenübertragung von Datenpaketen in einem time-sensitiven Netzwerk gemäß TSN Standard. Das Netzwerk besteht dabei aus einzelnen Netzelementen und der Zeitablauf ist in jedem Netzelement eingeteilt in vorgeplante, gleichgroße Zeitfenster.

Die Netzelemente verfügen jeweils über einen eigenen unabhängigen Zeitmesser und diese Zeitfenster beginnen und enden bei allen Netzelementen zu den gleichen Zeitpunkten. Die Übertragung eines Datenpakets von einem ersten Netzelement zu einem darauffolgenden Netzelement erfolgt in dem Zeitfenster, welches dem Zeitfenster folgt, in dem dieses Datenpaket von einem vorhergehenden Netzelement empfangen wurde.

Jedes Netzelement bestimmt dann basierend auf dem durch eigenen unabhängigen Zeitmesser und einem Verzögerungswert, zu welchem Zeitpunkt das nächste Sendefenster beginnt und/oder endet.

Weitere vorteilhafte Ausführungsformen der Erfindung sind durch die Merkmale der Unteransprüche angegeben.

Beschrieben wird eine neue Traffic Shaping Methode für zeitsensitive Datenstreams, die im Folgenden auch "Packet Delay Variation Compensation (PDVC)" genant wird. Es ist das Ziel, die gleiche Echtzeit-Performanz und Konfigurations-Komplexität zu bieten wie CQF aber ohne die Notwendigkeit einer Zeitsynchronisierung des kompletten Netzwerks.

Der PDVC Shaper sorgt ebenfalls dafür, dass ein Datenframe, der durch eine Bridge in einem ersten Zeitintervall empfangen wird, durch diese Bridge in dem nächsten Zeitintervall an den nächstliegenden Hop/Bridge weiter gereicht wird.

Ein wesentlicher Unterschied zu CQF besteht darin, wie diese Zeitintervalle in den Bridges realisiert werden. CQF realisiert die Intervallen in der Bridge in einer bestimmten Weise durch Verwendung von einem zyklischen Netz-zentralen Timer und formt die Streams einer vorgegebenen Transport-Klasse basierend auf demselben Schedule (eine Abfolge von aufeinander folgenden Zeitintervallen). Der zyklische Timer der CQF Bridges im Netzwerk muss dabei auf einer gemeinsamen Zeitbasis laufen, damit die Zeitintervalle auf die gleiche Startzeit synchronisiert werden können.

Das hier beschriebene Verfahren kommt ohne die im Verfahren gemäß dem Stand der Technik unverzichtbare zentrale Zeitbasis aus. Jede Bridge kennt die Startzeit des Zeitintervalls, das zu einem bestimmten Datenstream gehört. Dieser ist durch die Quelle des Streams definiert, (StreamID), durch Verfolgung des Zeitablaufs jedes Frames an jedem Hop entlang des Datenpfads von der Quelle zur Senke. Jeder Datenframe muss einen sogenannten "Delay Wert" enthalten, also einen Verzögerungswert, der durch jede Bridge gemessen wird unter Verwendung einer lokalen Uhr die die Verzögerungszeit misst, die der Datenframe in der Warteschlange am ausgehenden Port verbringt. Abhängig von der Implementierung sollte der gemessene Delay Wert jeden Delay herausrechnen, der durch den PDVC Shaper verursacht wird, und widerspiegelt, wie die tatsächliche Übertragungszeit AT abweicht von der geplanten Übertragungszeit. Die geplante Übertragungszeit für einen Datenframe, üblicherweise als Eligibility Time ET bezeichnet, wird vom PDVC Shaper zum frühest möglichen Zeitpunkt ermittelt, wenn der Daten-Frame in der Wartenschlage des Ausgangsübertragungs-ports eingetragen wird.

Der Verzögerungswert, Delay Value DV, der an der Bridge gemessen wird, berechnet sich wie folgt:

$$DV(i) = AT(i) - ET(i)$$

Wenn die nächste Bridge im Übertragungspfad i+1 einen Datenframe mit DV(i) erhält, dann berechnet es ET(i+1) für den Datenframe

$$ET(i + 1) = T - (DV(i) + CD)$$

wobei T das Klassen-Messintervall welches zu dem Stream dieses Datenframes gehört und das Übertragungsintervall des Streams an seiner Quelle repräsentiert. Als konstanter Parameter von PDVC für eine SR Klasse muss der Wert von T an jeder Bridge konfiguriert werden, entweder durch ein NetzManagement oder während der Stream Reservierung mit SRP.

CD ist ein Verzögerungswert bestehend aus den folgenden Komponenten, die abhängig von der Hardware und Framegrößenspezifisch sind:

- Der Verzögerungswert des Datenframes (delay) gemessen von AT(i), welches die tatsächliche Startzeit der Datenübertragung am Ausgangsport der Bridge i zum Zeitpunkt wenn der vollständige Datenframe beim Eingangsport der nächstfolgenden Bridge i+1 empfangen wurde. Der Hauptteil dieses Verzögerungswerts kann in Bridge i+1 einfach berechnet werden basierend auf der Geschwindigkeit des Übertragungslinks und der Framegröße. Der verbleibende Teil ist abhängig von der Hardware, inclusive dem Verzögerungswert des Kabels (link propagation delay) zwischen der sendenden Bridge i und der empfangenden Bridge i+1, der ebenfalls durch das Netzmanagement festgelegt oder durch Messungen durch ein Zeitsynchronisierungsprotokoll ermittelt werden, beispielswese gPTP of 802.1AS, sofern geeignet.
- Der Verzögerungswert des Vermittlungsvorgangs in der Bridge i+1, üblicherweise handelt es sich hier um einen festen Wert, der sich in der Hardware Spezifikation der Bridge findet.

Wie in der zweiten Formel angedeutet, stellt PDVC den ET für einen Datenframe auf der aktuellen Bridge fest, basierend auf der Verzögerungsinformation des Datenframes am vorherigen Hop. Solch ein Shaping-Ansatz basiert auf der Information aus dem vorhergehenden Hop, und wird auch als "Route based Traffic Shaping" bezeichnet.

Im Folgenden wird die Erfindung durch Figuren erläutert.

Figur 1 das erfindungsgemäße Vorgehen und

Figur 2 zeigt das Vorgehen gemäß dem Stand der Technik.

Figur 2 wurde bereits in der Beschreibungseinleitung näher erläutert.

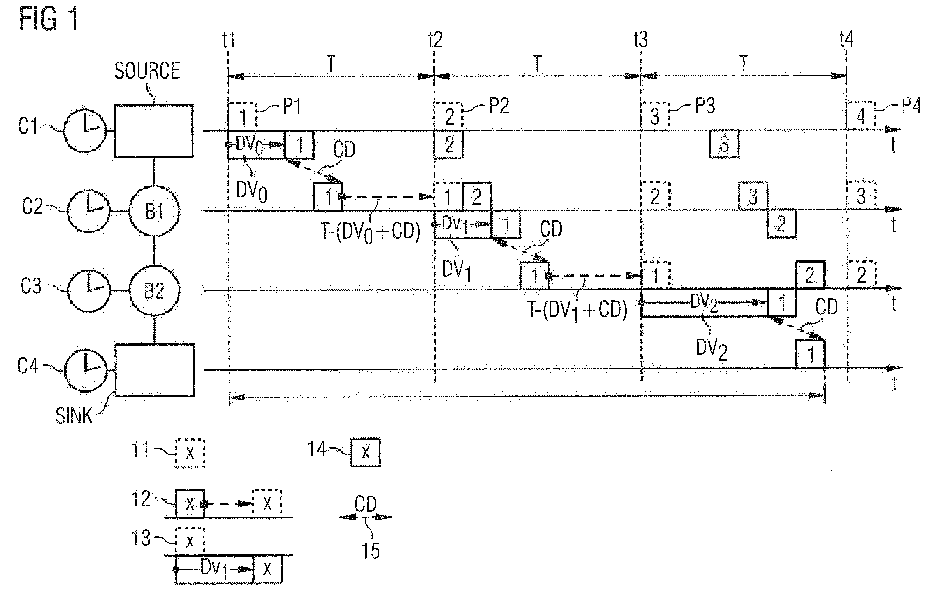

Figur 1 zeigt ein Beispiel des erfindungsgemäßen Vorgehens, unter Verwendung des PDVC Shapers für die Übertragung eines einzelnen Datenstreams von der Quelle Source durch 2 Bridges B1, B2 zu einer Datensenke, Sink. Jedes dieser Netzelemente hat eine eigene Zeitmesser C1 bis C4, welche autark ist und nicht synchronisiert mit einer der anderen Zeitquellen.

Wie dargestellt, generiert die Datenquelle, Source, periodisch einen Frame P1, P2, P3, P4 zu den Zeitpunkten t1, t2, t3, t4 wobei zwischen den Zeitpunkten t1 bis t4 jeweils ein gleichbleibendes Zeitintervall T liegt. Der Startzeitpunkt des jeweiligen Zeitintervalls ist in der Figur durch eine gestrichelte senkrechte Linie dargestellt. Die Datenpakete in gestrichelten Linien zeigen den Zeitpunkt, an dem das Paket geplant abgesendet werden soll, die Pakete mit durchgezogener Linie unterhalb der jeweiligen Zeitlinie t des jeweiligen Netzelementes dann den tatsächlichen Zeitpunkt, an dem das Paket - optimalerweise im selben Zeitfenster - abgesendet wird. Mit der Hilfe vom Verzögerungswert DV0, DV1, DV2, der durch den Aufenthalt in der ausgehenden Warteschlange des Ausgangsports der jeweiligen Netzelemente entsteht, der bei jedem Hop gemessen wird und als zusätzliches Datenfeld im Frame mit zum nächsten Netzelement übertragen wird, kann jede darauffolgende empfangende Bridge B1, B2 den Zeitpunkt der Übertragung des Datenframes zeitlich neu ausrichten. Der Übertragungszeitpunkt berechnet sich dabei gemäß der Formel für ET(i+1) von oben. CD bezeichnet einen zusätzlichen konstanten Delay pro Sprung. Dieses Feature von PDVC ist vorteilhaft für die Kontrollanwendung, wo eine Anzahl von Streams in das Netzwerk aus verschiedenen Datenquellen zu verschiedenen Zeitpunkten in einer koordinierten Art und Weise. PDVC kann die gleichen Übertragungsreihenfolgen bei allen Streams beim Ausgangsport jeder Bridge entlang des Datenübertragungspfads.

Um sicherzustellen, dass PDVC korrekt arbeitet, muss PDVC auf allen Bridges B1, B2 entlang des Datenübertragungspfades angewendet werden, ebenso wie in den Datenquellen, wenn diese Datenquellen außerdem noch anderen Datenverkehr erzeugen, welcher sich mit dem ersten Datenverkehr in Konflikt befindet und die geplante Übertragung zeitlich verzögern.

Die maximale Verzögerung pro Bridge und die maximale End-to-End Latenz von PDVC sind ähnlich zu CQF wegen der Abhängigkeit von dem Intervall T und der Anzahl der Hops h.

PDVC per bridge Delay < 2T

per Hop delivery Jitter = 2T

$$(h - 1) * T < PDVC\ end\text{-}to\text{-}end\ latency < h * T$$

Die oben genannten Grenzwerte sind berechnet unter der Bedingung von Formel 2, dass der Wert von T immer kleiner als jeder möglicher Wert von (DV(i) + CD), der auftreten kann. Um sicherzustellen, dass die Bedingung immer erfüllt wird, gelten dieselben Bedingungen bei CQF für die Auswahl von T durch Berücksichtigung der maximalen Menge von Stream Daten, die während dem Zeitintervall T beobachtet plus einen maximal großen störenden Datenframe. Ähnlich zu CQF hilft eine kombinierte Verwendung von Frame Preemption und PDVC die Anzahl der möglichen Streamdata für ein festes Zeitintervall T, oder das Zeitintervall T verkleinern für dieselbe Menge von Streamdaten resultierend in einer reduzierten Worst-Case Latenz.

In dem Beispiel von Figur 1 werden weitere Zeitabweichungen der einzelnen lokalen Zeitmesser, die man für Zeitberechnungen des Shapers verwendet, ignoriert. Solche Abweichungen zwischen den verteilten Uhren stören den Betrieb von PDVC nicht, jedoch kann zu Verletzungen der gewünschten Verzögerungsgrenzen in den übertragenen Streams führen. Um diesen Effekt zu vermeiden darf die maximale Zeitabweichung, die zwischen zwei lokalen Uhren im Netzwerk auftreten kann, als zusätzlicher Faktor in der Konfiguration von PDVC berücksichtigt werden, indem entweder der Wert von T erhöht wird oder die Anzahl der reservieren Streams reduziert.

Der hier beschriebene Traffic Shaper bietet eine ähnlich gute Echtzeit-Performanz mit fester maximaler Latenz und festem Delivery Jitter wie CQF. Diese Leistungsfähigkeit wird in einer Vielzahl von Industrieanwendungen und -Steuerungen benötigt, die nicht allerhöchste Anforderungen an die Echtzeit stellen. Der größte Vorteil gegenüber der standardisierten Lösung ist, dass die Lösung auf ein zeitsynchronisiertes Netz wie PTP IEEE 1588 oder IEEE 802.1AS verzichten und damit die dafür sonst benötigten Kosten sparen kann.

Die Hauptmethode die zur Anwendung kommt ist das sogenannte Traffic Shaping um eine deterministische Leistung zu erhalten, die einen Delay für jeden Datenframe bei jedem Hop erzwingt, um so sicherzustellen dass der periodische Stream Traffic durch das Netz mit einer festen per-hop Verzögerung. Anders als bei CQF, das den Wert der Shaper-bedingten Verzögerung basierend auf einem globalen Timer berechnet, trifft PDVC diese Entscheidungen basierend auf vorangegangener Hop-Information, die gemessen wird mit Hilfe von lokalen Uhren, und in jedem Frame von Bridge zu Bridge übertragen wird.

**Patentansprüche**

1. Verfahren zur zeitgesteuerten Datenübertragung von Datenpaketen (P1, P2, P3, P4) in einem time-sensitiven Netzwerk gemäß TSN Standard, wobei

   - jedes Datenpaket einem Datenstream zugeordnet und durch eine eindeutige StreamID gekennzeichnet ist
   - das Netzwerk aus einzelnen Netzelementen (Source, B1, B2, Sink) besteht, und
   - der Zeitablauf (t) in jedem Netzelement (Source, B1, B2, Sink) eingeteilt ist in vorgeplante, gleichgroße Zeitfenster (T) und
   - die Netzelemente (Source, B1, B2, Sink) jeweils über einen eigenen unabhängigen, nicht mit Zeitmessern anderer Netzelemente synchronisierten, Zeitmesser (C1, C2, C3, C4) verfügen, und
   - diese Zeitfenster bei allen Netzelementen zu den gleichen Zeitpunkten (t1, t2, t3, t4) beginnen und enden,

   **dadurch gekennzeichnet**, dass- die Übertragung eines Datenpakets (P1, P2, P3, P4) von einem ersten Netzelement (Source, B1, B2) zu einem darauffolgenden Netzelement (B1, B2, Sink) in dem Zeitfenster erfolgt, welches dem Zeitfenster folgt, in dem dieses Datenpaket (P1, P2, P3, P4) von einem vorhergehenden Netzelement (Source, B1, B2) empfangen wurde, und
   jedes Netzelement (Source, B1, B2, Sink) die Startzeit des Zeitfensters kennt, das zu einem Datenstream gehört, jedes Netzelement (Source, B1, B2, Sink) basierend auf dem durch eigenen unabhängigen, nicht mit Zeitmessern anderer Netzelemente synchronisierten, Zeitmesser (C1, C2, C3, C4) und einem Verzögerungswert (DVi) bestimmt, zu welchem Zeitpunkt (t1, t2, t3, t4) das nächste Zeitfenster für das Senden beginnt und/oder endet und
   der benötigte Verzögerungswert (DVi) in dem sendenden Netzelement (Source, B1, B2) abhängig vom zugehörigen Datenstream berechnet wird und in dem Datenpaket (P1, P2, P3, P4) an das empfangende Netzelement (B1, B2, Sink) übertragen wird.

2. Verfahren gemäß Patentanspruch 1,
   **dadurch gekennzeichnet, dass**
   der Verzögerungswert (DVi) berechnet wird aus der tatsächlichen Übertragungszeit AT(i), abzüglich der geplanten Übertragungszeit ET (i) .

3. Verfahren gemäß einem der vorherigen Patentansprüche,
   **dadurch gekennzeichnet, dass**
   dich die geplante Übertragungszeit im nächsten Übertragungsschritt ET(i+1) berechnet durch das Messintervall T - (Verzögerungszeit DV(i) zuzüglich einem weiteren Verzögerungswert (CD).

4. Verfahren gemäß einem der vorherigen Patentansprüche,
   **dadurch gekennzeichnet, dass**
   für die Bestimmung des Verzögerungswerts (CD) die Übertragungszeit für das Datenpaket (P1, P2, P3, P4) bestimmt wird durch Ermittlung

   - der Zeitdauer der Übertragung durch Startzeit der Datenübertragung am sendenden Netzelement (Source, B1, B2) bis zum vollständigen Empfang des Datenpakets am empfangenden Netzelement (B1, B2, Sink) plus einen hardwareabhängigen Zeitverzögerungsanteil und
   - der Zeitdauer des Vermittlungsvorgangs in dem Netzelement (Source, B1, B2, Sink).

5. Verfahren gemäß Patentanspruch 4,
   **dadurch gekennzeichnet, dass**
   die Zeitdauern vorab ermittelt werden durch ein Zeitsynchronisierungsprotokoll.

6. Netzelement (Source, B1, B2, Sink) welches dazu eingerichtet ist, in einem time-sensitiven Netzwerk gemäß TSN Standard betrieben zu werden, wobei
   das Netzwerk aus einzelnen Netzelementen (Source, B1, B2, Sink) besteht, und

   - der Zeitablauf (t) in jedem Netzelement (Source, B1, B2, Sink) eingeteilt ist in vorgeplante, gleichgroße Zeitfenster (T) und

- die Netzelemente (Source, B1, B2, Sink) jeweils über einen eigenen unabhängigen, nicht mit Zeitmessern anderer Netzelemente synchronisierten, Zeitmesser (C1, C2, C3, C4) verfügen, und
- diese Zeitfenster bei allen Netzelementen zu den gleichen Zeitpunkten (t1, t2, t3, t4) beginnen und enden, und
- jedes zu sendende Datenpaket (P1, P2, P3, P4) einem Datenstream zugeordnet und durch eine eindeutige StreamID **gekennzeichnet ist**

**dadurch** gekennzeichnet, dass

- das Netzelement (Source, B1, B2) dazu eingerichtet ist, das Datenpaket (P1, P2, P3, P4) zu einem darauffolgenden Netzelement (B1, B2, Sink) in dem Zeitfenster, welches dem Zeitfenster folgt, in dem dieses Datenpaket (P1, P2, P3, P4) von einem vorhergehenden Netzelement (Source, B1, B2) empfangen wurde, zu senden und

jedes Netzelement (Source, B1, B2, Sink) die Startzeit des Zeitfensters kennt, das zu einem Datenstream gehört, und das Netzelement (Source, B1, B2, Sink) basierend auf dem durch eigenen unabhängigen, nicht mit Zeitmessern anderer Netzelemente synchronisierten, Zeitmesser (C1, C2, C3, C4) und einem Verzögerungswert (DVi) bestimmt, zu welchem Zeitpunkt (t1, t2, t3, t4) das nächste Zeitfenster für das Senden beginnt und/oder endet indem der benötigte Verzögerungswert (DVi) in dem sendenden Netzelement (Source, B1, B2) abhängig vom zugehörigen Datenstream berechnet wird und in dem Datenpaket (P1, P2, P3, P4) an das empfangende Netzelement (B1, B2, Sink) übertragen wird.

7. Vorrichtung geeignet zur Durchführung des Verfahrens gemäß der Merkmale eines der Patentansprüche 1 bis 5.

## Claims

1. Method for the time-controlled data transmission of data packets (P1, P2, P3, P4) in a time-sensitive network in accordance with the TSN standard, wherein

    - each data packet is assigned to a data stream and is identified by a unique stream ID,
    - the network consists of individual network elements (Source, B1, B2, Sink), and
    - the time sequence (t) in each network element (Source, B1, B2, Sink) is divided into pre-scheduled, equal-sized time windows (T) and
    - the network elements (Source, B1, B2, Sink) each have their own independent timer (C1, C2, C3, C4) which is not synchronized with timers of other network elements, and
    - these time windows for all network elements start and end at the same time points (t1, t2, t3, t4),

    **characterized in that** the transmission of a data packet (P1, P2, P3, P4) from a first network element (Source, B1, B2) to a subsequent network element (B1, B2, Sink) takes place in the time window following the time window in which this data packet (P1, P2, P3, P4) was received by a preceding network element (Source, B1, B2), and each network element (Source, B1, B2, Sink) knows the start time of the time window belonging to a data stream, each network element (Source, B1, B2, Sink) determines, based on its own independent timer (C1, C2, C3, C4) which is not synchronized with timers of other network elements and a delay value (DVi), at what time point (t1, t2, t3, t4) the next transmit time window begins and/or ends, and the required delay value (DVi) is calculated in the transmitting network element (Source, B1, B2) depending on the associated data stream and is transmitted in the data packet (P1, P2, P3, P4) to the receiving network element (B1, B2, Sink).

2. Method according to Patent Claim 1,
    **characterized in that**
    the delay value (DVi) is calculated from the actual transmission time AT(i) minus the scheduled transmission time ET (i) .

3. Method according to one of the preceding patent claims,
    **characterized in that**
    the scheduled transmission time is calculated in the next transmission step ET(i+1) by the measurement interval T - (delay time DV(i) plus an additional delay value (CD)).

**4.** Method according to one of the preceding patent claims,
**characterized in that**
for determining the delay value (CD) the transmission time for the data packet (P1, P2, P3, P4) is determined by determining

- the duration of the transmission using the start time of the data transmission at the transmitting network element (Source, B1, B2) until the complete reception of the data packet at the receiving network element (B1, B2, Sink) plus a hardware-dependent time delay component and
- the duration of the switching process in the network element (Source, B1, B2, Sink).

**5.** Method according to Patent Claim 4,
**characterized in that**
the durations are determined in advance by a time synchronization protocol.

**6.** Network element (Source, B1, B2, Sink) which is configured to be operated in a time-sensitive network in accordance with the TSN standard, wherein
the network consists of individual network elements (Source, B1, B2, Sink), and

- the time sequence (t) in each network element (Source, B1, B2, Sink) is divided into pre-scheduled, equal-sized time windows (T), and
- the network elements (Source, B1, B2, Sink) each have their own independent timer (C1, C2, C3, C4) which is not synchronized with timers of other network elements, and
- these time windows for all network elements start and end at the same time points (t1, t2, t3, t4), and
- each data packet (P1, P2, P3, P4) to be transmitted is assigned to a data stream and is identified by a unique stream ID,

**characterized in that**

- the network element (Source, B1, B2) is configured to transmit the data packet (P1, P2, P3, P4) to a successive network element (B1, B2, Sink) in the time window which follows the time window in which this data packet (P1, P2, P3, P4) was received by a preceding network element (Source, B1, B2), and each network element (Source, B1, B2, Sink) knows the start time of the time window belonging to a data stream, and

the network element (Source, B1, B2, Sink) determines, based on its own independent timer (C1, C2, C3, C4) which is not synchronized with timers of other network elements and a delay value (DVi), at what time point (t1, t2, t3, t4) the next transmit time window begins and/or ends by
calculating the required delay value (DVi) in the transmitting network element (Source, B1, B2) depending on the associated data stream and transmitting it in the data packet (P1, P2, P3, P4) to the receiving network element (B1, B2, Sink).

**7.** Device suitable for implementing the method in accordance with the features of one of Patent Claims 1 to 5.

**Revendications**

**1.** Procédé pour la transmission de données à commande temporelle de paquets de données (P1, P2, P3, P4) dans un réseau sensible au temps conformément à la norme TSN, dans lequel

- chaque paquet de données correspond à un flux de données et est identifié par un identifiant streamID unique
- le réseau est composé d'éléments de réseau (source, B1, B2, sink) individuels, et
- le déroulement temporel (t) dans chaque élément de réseau (source, B1, B2, sink) est divisé en fenêtres temporelles (T) prédéfinies, de même taille et
- les éléments de réseau (source, B1, B2, sink) disposent chacun d'un propre chronomètre (C1, C2, C3, C4) indépendant, non synchronisé avec des chronomètres d'autres éléments de réseau, et
- ces fenêtres temporelles commencent et terminent aux mêmes moments (t1, t2, t3, t4) sur tous les éléments de réseau,

**caractérisé en ce que** la transmission d'un paquet de données (P1, P2, P3, P4) d'un premier élément de réseau (source, B1, B2) à un élément de réseau (B1, B2, sink) suivant s'effectue dans la fenêtre temporelle qui suit la fenêtre temporelle dans laquelle ce paquet de données (P1, P2, P3, P4) a été reçu d'un élément de réseau (source, B1, B2) précédent, et chaque élément de réseau (source, B1, B2, sink) connaît le temps de départ de la fenêtre temporelle qui fait partie d'un flux de données, chaque élément de réseau (source, B1, B2, sink), en se basant sur le chronomètre (C1, C2, C3, C4) propre indépendant, non synchronisé avec des chronomètres d'autres éléments de réseau et une valeur de temporisation (DVi) détermine à quel moment (t1, t2, t3, t4) la fenêtre temporelle suivante commence et/ou termine pour l'émission et

la valeur de temporisation (DVi) nécessaire est calculée dans l'élément de réseau (source, B1, B2) émetteur en fonction du flux de données correspondant et est transmise à l'élément de réseau (B1, B2, sink) récepteur dans le paquet de données (P1, P2, P3, P4).

2. Procédé selon la revendication 1, **caractérisé en ce que** la valeur de temporisation (DVi) est calculée à partir du temps de transmission AT(i) réel moins le temps de transmission ET(i) prévu.

3. Procédé selon l'une des revendications précédentes, **caractérisé en ce que** le temps de transmission prévu se calcule dans l'étape de transmission suivante ET(i+1) par l'intervalle de mesure T - (temps de temporisation DV(i) plus une autre valeur de temporisation (CD).

4. Procédé selon l'une des revendications précédentes, **caractérisé en ce que** pour déterminer la valeur de temporisation (CD), le temps de transmission pour le paquet de données (P1, P2, P3, P4) est déterminé par le calcul

   - de la durée de la transmission par le temps de départ de la transmission de données sur l'élément de réseau (source, B1, B2) émetteur jusqu'à la réception complète du paquet de données sur l'élément de réseau (B1, B2, sink) récepteur plus une part de temporisation fonction du matériel et
   - de la durée de la procédure de transfert dans l'élément de réseau (source, B1, B2, sink).

5. Procédé selon la revendication 4, **caractérisé en ce que** les durées sont déterminées au préalable par un protocole de synchronisation.

6. Élément de réseau (source, B1, B2, sink) qui est conçu pour être entraîné dans un réseau sensible au temps conformément à la norme TSN, dans lequel

   - le réseau est composé d'éléments de réseau (source, B1, B2, sink) individuels, et
   - le déroulement temporel (t) dans chaque élément de réseau (source, B1, B2, sink) est divisé en fenêtres temporelles (T) prédéfinies, de même taille et
   - les éléments de réseau (source, B1, B2, sink) disposent chacun d'un propre chronomètre (C1, C2, C3, C4) indépendant, non synchronisé avec des chronomètres d'autres éléments de réseau, et
   - ces fenêtres temporelles commencent et terminent aux mêmes moments (t1, t2, t3, t4) sur tous les éléments de réseau, et
   - chaque paquet de données (P1, P2, P3, P4) à envoyer correspond à un flux de données et est identifié par un identifiant streamID unique

   **caractérisé en ce que**

   - l'élément de réseau (source, B1, B2) est conçu pour envoyer le paquet de données (P1, P2, P3, P4) à un élément de réseau (source, B1, B2, sink) suivant dans la fenêtre temporelle qui suit la fenêtre temporelle dans laquelle ce paquet de données (P1, P2, P3, P4) a été reçu d'un élément de réseau (source, B1, B2) précédent, et

   chaque élément de réseau (source, B1, B2, sink) connaît le temps de départ de la fenêtre temporelle qui fait partie d'un flux de données, et l'élément de réseau (source, B1, B2, sink), en se basant sur le propre chronomètre (C1, C2, C3, C4) indépendant, non synchronisé avec des chronomètres d'autres éléments de réseau et une valeur de temporisation (DVi) détermine à quel moment (t1, t2, t3, t4) la fenêtre temporelle suivante commence et/ou termine pour l'émission et

   la valeur de temporisation (DVi) nécessaire est calculée dans l'élément de réseau (source, B1, B2) émetteur en fonction du flux de données correspondant et est transmise à l'élément de réseau (B1, B2, sink) récepteur dans le paquet de données (P1, P2, P3, P4).

7. Dispositif approprié pour l'exécution du procédé selon les caractéristiques d'une des revendications 1 à 5.

FIG 1

EP 3 577 802 B1

FIG 2
Stand der Technik

**IN DER BESCHREIBUNG AUFGEFÜHRTE DOKUMENTE**

**In der Beschreibung aufgeführte Patentdokumente**

- EP 1940089 A1